# EUROPEAN PATENT APPLICATION

(11) **EP 1 541 020 A1**
(43) Date of publication of application: **15.06.2005**
(21) Application number: 03748132.2
(22) Date of filing: 04.09.2003
(51) Int. Cl.: A01K 91/18, A01K 83/06

(54) **TURTLE EXCLUSION SYSTEM FOR HOOK AND LONG-LINE FISHING**

(30) Priority: 06.09.2002 ES 200202045
(71) Applicant: San Felix, Manuel, 07870 Formentera (La Savina) (ES); Güell Renalias, Joan, 07862 Baleares (ES); Garcia Carrascosa, Antonio M., Naquera, 46119 Valencia (ES)
(72) Inventor: San Felix, Manuel, 07870 Formentera (La Savina) (ES); Güell Renalias, Joan, 07862 Baleares (ES); Garcia Carrascosa, Antonio M., Naquera, 46119 Valencia (ES)
(74) Representative: Naranjo Marcos, Maria Antonia
(86) International application number: PCT/ES2003/000449
(87) International publication number: WO 2004/021776

(57) **Abstract**

Selective fishing gear that prevents accidental harm to creatures at the same time as it allows the normal catch of target species; that facilitates a simple, convenient and practical handling of the apparel regarding baiting, casting, hauling and stowing; and which reduces the problems suffered by fishermen as a result of catching unwanted species (discards). This gear consists of a fishhook body attached in a familiar way to the end of a line; a stopper device through which the line passes and to which it is attached, at a short distance from the fishhook body, elongated and of a reduced section, destined to support the bait on its open end.

## Description

### Scope of the invention;

This invention refers to fishing gear, preferentially destined for longline fishing, which has an improved structure that prevents accidental harm to certain predetermined species at the same time as it permits the normal catch of the target species.

### Antecedents of the invention;

It is well-known that longline fishing, whether it is surface (also called float or drift) or bottom fishing, consists of a main line about 300 m long from which, every 20 m, a thick line hangs, about 2 m long, followed by a finer one 10-15 m long from which the fishhook hangs. A longline can be made up of several main lines and, therefore, be several kilometres long and hold thousands of hooks.

In particular, surface longline fishing is the most habitual and, in this method, the floating longline is usually placed in such a way that the main line hangs at a depth of approximately 3-4 m and the hooks at 15-25 m, a small float being placed at even-spaced intervals of four hooks and two buoys on each end of the main line to ensure the floatability of the longline. In this type of longlining, the normal size of the fishhook is between 8-10 cm, except for longline fishing of Atlantic pomfret (Brama brama) where hooks of a smaller size are used.

On the other hand, the loggerhead sea turtle (Caretta caretta) is classified as a vulnerable species on the International Union for the Conservation of Nature & Natural Resources' (IUCN) Red List of Threatened Species. Although other species of sea turtles such as the green turtle (Chelonia mydas) are object of exploitation for human consumption or for their shells, the loggerhead turtle is not a target of such a direct and intense fishery and, even so, there has been an important decline in their population. In some sectors such as the Northwest Atlantic and the Mediterranean, the decline in their population has been especially significant over the past two decades and this has been interpreted as a consequence of, at least, three characteristic circumstances:
1. The reduction of the beaches used for nesting due to progressive urbanisation of the coastline.
2. The mortality associated with the ever-increasing pollution of the seas, mainly by heavy metals, PCB's, plastic waste, etc.
3. The interaction with commercial fisheries, in which turtles are frequently caught and discarded.

Various studies carried out mainly in waters of the North Atlantic and the Mediterranean have shown that there are basically three types of fishing techniques that account for the greater part of the mortality or accidental capture of this species of turtle: i) trawling, for which either fishing at less than 50 m of depth has been banned or by law fishing gear has to be fitted with devices for preventing the accidental catch of turtles, depending on the fishing zone; ii) fishing with trammel, drift or gill nets, which, as it is not only the cause of a high mortality rate of loggerhead turtles but also of other creatures that are non-target species (such as various seabirds, dolphins, seals, large cetacean young, etc.), is now being banned or limited in many regions, like, for example in Community waters in which, theoretically, this method is only used in poaching; and iii) longlining, for which no means have been established in order to minimise its negative effects, mainly caused by floating longlines.

Other recent studies, amongst which is the one carried out by the Spanish entity ICONA (Institute for the Conservation of Nature) in 1992, have shown the tremendous negative impact that the above-mentioned surface longline fishing, with floating longlines, has on the loggerhead turtle population in Mediterranean waters. This type of fishing leads to a significant reduction in the loggerhead turtle population in the Mediterranean, which are accidentally caught in direct catches during this method of fishing as well as those that are mortally wounded or directly killed as a result of the injuries caused by the fishing gear and that end up being stranded.

In particular, the repercussions that longline fishing gear has on loggerhead turtles are the following:
1. Risk of drowning the turtles when they are trapped.
2. Injuries caused by the hook, even though the creature does not swallow it.
3. Injuries caused by the hook when the fishing gear is retrieved, when the turtle is hoisted to the ship suspended by the hook that it has swallowed and is thrown back into the sea again with the hook inside its body.
4. Injuries caused by the line when the fishing gear is retrieved, when the turtle is hoisted to the ship suspended by the hook that it has swallowed and is thrown back into the sea again with the hook inside its body and with several metres of line hanging from it.

The most serious injuries are those caused by the line which, as it is swallowed, causes the strangling of the digestive system, producing the death of the creature due to intestinal torsion (also known as twisted gut).

In spite of the overwhelming results of these studies, it is difficult to adopt measures to palliate the negative impact of this fishing activity on the loggerhead turtle, due to the social and economic complexity that surrounds the industry of this sector. However, these accidental deaths of loggerhead turtles are a problem of conservation of a first international order, because, as we have already mentioned previously, this species is classified as " vulnerable" on the IUCN' s Red List of Threatened Species and is in serious danger of extinction.

Therefore, the solution lies in the introduction of limitations on the longline fishing fleet activity, which is unthinkable due to the economic importance of this activity, or the modification of the fishing gear so that its impact on the population of loggerhead turtles can be minimised.

However, up to now, the fishing gears used in longline fishing have yet to be adapted in order to reduce their negative impact on turtles.

### Summary of the invention;

Sea turtles in general are not predators due to their slowness, feeding mainly on seagrass, jellyfish, pelagic tunicate, carrion, etc. When they encounter floating longlines, they approach them slowly, swallowing the bait and the hook without biting it. In fact, only 15% of sea turtles caught on longlines are caught by their mouth, the remaining 85% getting the hook caught in their oesophagus or in their oral-pharyngeal cavity.

On the other hand, the species of commercial interest are nektonic ones that can be classified as large predators, such as the swordfish (XIPHIAS gladius), the bluefin tuna (Thunnus thynnus), the Atlantic pomfret (Brama brama), the shortfin mako (Isurus oxyrinchus), the blue shark (Prionace glauca), etc. When they encounter the bait, these creatures attack and bite it, swiftly tossing it around as if it were prey, and getting hooked themselves.

Therefore, it is evident that there is a great difference regarding the way sea turtles take the bait in general and the way in which the different species that are the target of longline fishing do so.

Bearing in mind this difference and, in order to overcome the above-mentioned obstacles, the present invention offers selective fishing gear, preferably for longline fishing, which reduces the risk of injuries to sea turtles in general, at the same time as it does not prevent the target species from being caught on the hook when attacking the bait.

Additionally, the selective fishing gear of the present invention facilitates the simple, convenient and practical handling of the apparel regarding its baiting, casting, hauling and stowing.

The selective fishing gear of the present invention also greatly reduces the problems faced by fishermen that are caused by catching non-target species (discards), such as wasting time, unnecessary manoeuvring, loss or deterioration of fishing gear, etc., helping to make the fishing gear more efficient in the selection, which is really the ideal objective of any fishing gear.

This selective fishing gear consists of a hook attached in a familiar way to the end of a line. The line goes through and is fixed to a stopper device, a short distance from the fishhook. On the other hand, the hook has an elongated appendage, with a very small section that is destined to support the bait on its open end.

In a preferable, although not exclusive, way, the stopper device is disc-shaped and is made of hard transparent plastic material. The disc shape prevents entangling with the line and facilitates its manipulation on board since the disc slides better between the lines and between the hooks of each main line when they are brought into the basket on deck at the time of casting. The hard transparent plastic material can be, for example, methyl polymethacrylate (commonly known as methacrylate or Plexiglas), but, in any case, it must be completely transparent and have the same index of refraction as sea water, and must not reflect sunlight. These requirements are essential since sea turtles on the high seas usually feed on food such as jellyfish, salpae and other semi-transparent gelatinous pelagic species, which means that, if the disc has a similar nature, it could act as an element for attracting sea turtles as they could mistake it for food (which is what occurs with plastic bags adrift) and, therefore, cause the opposite effects to those desired.

Alternatively, the stopper device can be a ring that has a series of radii that join it to the line in a central position. In this alternative, the material used for the ring and the radii would be metal.

Both the disc of plastic material and the metallic ring would be fitted, in the centre, standing out of at least one of its upper or lower sides, with a short hollow extension, integral or accessory, through which the line passes and which has the purpose of holding the disc in a perpendicular position with regard to the line.

The bait-carrying appendage, usually made of metal, although it can also be made of hard plastic material, can be an integral part of the fishhook or it can be attached to it, after being produced separately, by means of appropriate conventional means, as, for example welding or riveting. The bait-carrying appendage will have, in any case, the required rigidity to maintain its overall shape, although it will be extremely flexible, and will preferably have a filiform section to facilitate its flexion in any dimension.

The bait-carrying appendage can also have folds on its open end, so that a hook may be formed to facilitate the placement of the bait.

By means of the above-mentioned selective fishing gear we achieve a double benefit for sea turtles:
1. The probability of a turtle getting caught on the fishhook when it goes to eat the bait is significantly reduced, since the latter is far enough away from the point of the hook.
2. It is more difficult to swallow the fishhook and, in any case, the ingestion of the line is avoided if the turtle were to swallow the hook, since the stopper device prevents this from occurring.

Also, the invention facilitates the normal capture of target species since, when the bait is attacked by a target species, the bait-carrying appendage will flex in such a way that it will allow the creature to come into contact with the fishhook and bite it, therefore being caught as the relatively reduced dimensions of the end piece allow this to happen.

It is necessary to highlight that, although one prefers a complete structure as has been previously described, it is also possible to use the fishing gear of the invention alternately omitting either the end-piece or the bait-carrying appendage, if the particular use so requires.

### Brief description of figures;

The present invention will be explained in further detail in the description below, given purely as an example but not restrictively, with reference to the accompanying diagrams, in which:
Figure 1 is a schematic view of a first realisation of the fishing gear of the invention;
Figure 2 is a partial cross-section view of the realisation of Figure 1 including an optional detail; and
Figure 3 is a schematic view of a second realisation of the fishing gear of the invention.

### Description of realisations preferred;

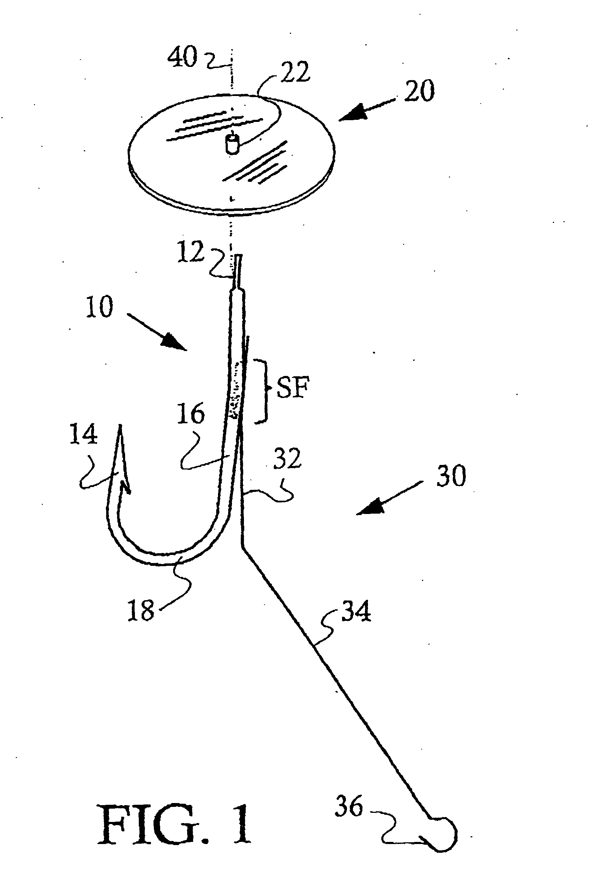

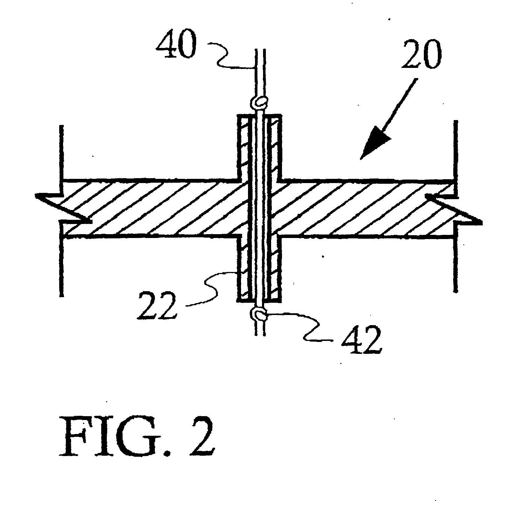

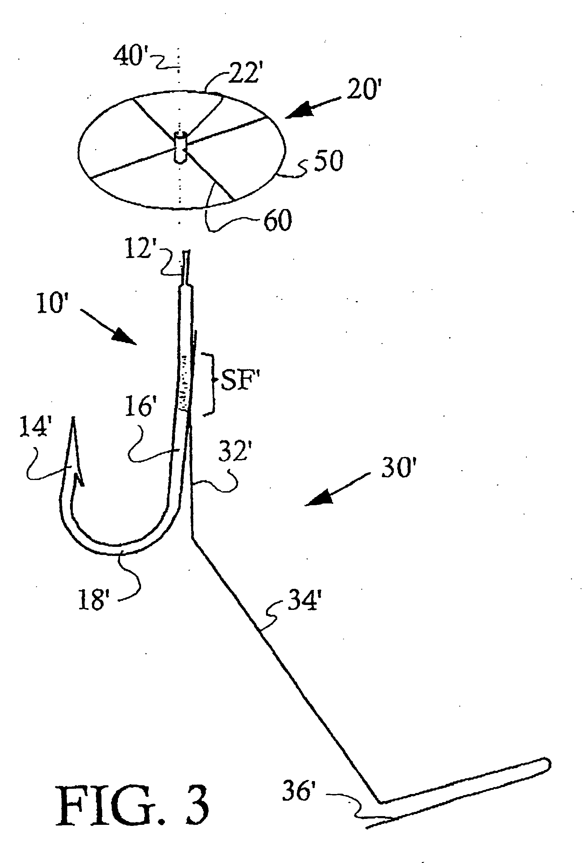

With reference now to the diagrams, in which similar components have been designated with the same numbers subsequently adding a prime symbol, Figures 1 and 3 each represent the realisations preferred for fishing gear according to the present invention, destined to prevent the impact of the fishing gear used in surface longline fishing on the population of loggerhead turtles (Caretta caretta), and Figure 2 represents a detail of the realisation shown in Figure 1, including optional characteristics.

Figure 1 shows fishing gear that consists of a 10 fishhook with a 30 appendage and a 40 line with a 20 stopper device.

The 10 fishhook is an individual round hook, of about 9 cm long, habitually used in longline fishing of species such as, for example, swordfish (Xiphias gladius), shortfin mako (Isurus oxyrinchus) or blue shark (Prionace glauca).

The 12 head of the 10 fishhook is attached in a conventional way to the 40 line, to which the 20 stopper device is tightly fixed, approximately 5 cm from the 12 head of the 10 fishhook.

The 20 stopper device is a transparent disc, of hard plastic material, with an index of refraction similar to that of sea water, and which has a diameter of about 10 cm. In the centre it has a 22 integral coaxial connector that stands out approximately 1 cm from each of its sides and through which, of up to 2 mm diameter, the 40 line passes.

The 30 appendage of the 10 fishhook is made of metal, preferably stainless steel, of a filiform section of 0.5 mm in diameter, and is contained in the plane formed by the 10 fishhook. Also, it is composed of three consecutive parts: a first 32 part that is fixed, by means of welding, to the 16 shank of the 10 hook and that goes down in a substantially vertical way slightly past the end of the 16 shank; a second 34 part of approximately 8 cm long, attached in an elbow-like way to the lower end of the first 32 part, so that it forms an angle of approximately 35° with the vertical in the opposite direction to the 18 semicircle of the 10 fishhook; and a third 36 part, destined to holding the bait consequently displaced about 12 cm with regard to the 14 harpoon-like point of the 10 fishhook that is curved in such a way that it forms a hook that facilitates the retention of the bait, usually anchovy, sardine, mackerel or squid.

Optionally, as is shown in Figure 2, the 20 stopper device can be confined between a couple of 42 positioning knots, made in the line respectively just above and just below the position of the 22 axial cylindrical protuberance of the 20 stopper device.

Figure 3 shows fishing gear similar to that shown in Figure 1 except that the 20' end piece, also about 10 cm in diameter, is formed by a 50 tubular metallic ring, of a 0.8 mm section that has four integral 60 radii, equally metallic and tubular and of a 0.8 mm section that converge centrally in a 22' integral coaxial connector, of about 2 cm long and through which, of up to 2 mm in diameter, the 40' line passes, being tightly fixed to it, optionally with a couple of positioning knots made in the 40' line respectively just above and just below the position of the 22' connector of the 20' stopper device, in a way equivalent to the one shown in Figure 2 with regard to the realisation of Figure 1; and with the exception that the 36' curved part of the 30' appendage forms a kind of clamp destined, as in the previous case, to facilitate the retention of the bait.

Naturally, maintaining the principle of the invention, the construction details and the ways of realisation can greatly vary with regard to what is described and illustrated here, purely as an example, without going beyond its scope as we can see in the claims enclosed.

In particular, the contour of the stopper devices can be any shape, although the realisations described and illustrated have stopper devices of a circumferential contour because this specific form minimises the risk of entangling with the line and facilitates its manipulation on board, since the piece slides better between the lines and between each main line hook when winched into the basket on deck at the time of casting. Likewise, the stopper device of Figure 1 can be made of another material provided the requirements of transparency and anti-reflection are respected, and the stopper device of Figure 2 can be made of another appropriate material, such as hard plastic material, or can have a different number of radii.

On the other hand, the bait-carrying appendage can be made of a different material, such as, for example, hard plastic. Additionally, its elbow-like shape can be replaced by a curved one or, simply, the appendage can be straight and attached at an angle to the hook body. The appendage can even be an integral part of the fishhook body as has been described and illustrated here, which would facilitate and reduce the cost of its production and would also improve the control of its use if it ends up being approved and being considered mandatory by the competent authorities, or it can be removable, which would allow the fishing gear of the invention to be used in other types of fishing without removing the body of the fishhook of the line and could be replaced if damaged.

Its open end can also have any appropriate shape that facilitates the emplacement of the bait, even a clamp (such as the crocodile-clamp used in electronics). In any case, the bait-carrying appendage must be highly flexible in order to allow the target species to bite the fishhook body when they attack the appendage, and its open end will not be sharp so that the turtle will not become entangled if it bites.

Finally, the fishhook body can be any shape, provided its bait-carrying appendage is placed so that the bait can be sufficiently displaced with regard to its harpoon-like end (s). Obviously, the fishhook body can have a ring instead of a head for joining the line, the union being carried out with or without the use of a revolving coupling device.

Additionally, although the development of the fishing gear of the invention has been based on studies related with the impact of surface longline fishing on the population of loggerhead turtles and, therefore, the structural characteristics of the fishing gear of the invention are described specifically in relation to this application, the invention is evidently not limited to this particular interaction, being equally applicable to other types of turtle, for example the leatherback turtle (Dermochelys CORIACEA), and to other types of fishing, consequently adapting the structural characteristics of the device of the invention with regard to the ones previously described here as an example.

However, regarding this last possibility, it must be pointed out that, if the fishing gear of the invention is formed by a small-sized fishhook, the stopper device can mean a very strong interaction with fishing, the fishing gear of the invention being able to be used by simply removing the stopper device.

## Claims

1. Selective fishing gear, destined to prevent accidental harm to certain predetermined creatures and at the same time to habitually allow the normal catch of the target species, **characterised by** consisting of a stopper device fixed to a line, and a fishhook body connected to this line near the stopper device and which has an elongated, flexible appendage emplaced in such a way that its open end is far from the harpoon-like point of the fishhook body.

2. Selective fishing gear according to Claim 1, **characterised by** the stopper device having an overall discoidal shape.

3. Selective fishing gear according to Claim 2, **characterised by** the stopper device being transparent.

4. Selective fishing gear according to Claims 2 or 3, **characterised by** the stopper device being made of plastic material.

5. Selective fishing gear according to Claims 2, 3 or 4, **characterised by** the stopper device being provided with a coaxial connector that stands out from at least one of its sides and through which the line passes.

6. Selective fishing gear according to Claim 5, **characterised by** the coaxial connector being an integral part of the rest of the stopper device.

7. Selective fishing gear according to Claim 1, **characterised by** the stopper device being an integral assembly of ring and radii.

8. Selective fishing gear according to Claim 7, **characterised by** the stopper device being made of metal.

9. Selective fishing gear according to Claim 7, **characterised by** the stopper device being made of plastic material.

10. Selective fishing gear according to Claim 7, 8 or 9, **characterised by** the stopper device being provided with a coaxial connector that joins the radii and through which the line passes.

11. Selective fishing gear according to Claim 9, **characterised by** the coaxial connector being an integral part of the rest of the stopper device.

12. Selective fishing gear according to any of the previous claims, **characterised by** the line having two knots respectively just above and just below the stopper device.

13. Selective fishing gear according to any of the previous claims, **characterised by** the open end of the appendage of the fishhook body being curved and hook-shaped.

14. Selective fishing gear according to any of Claims 1 to 12, **characterised by** the open end of the appendage of the fishhook body being curved and clamp-shaped.

15. Selective fishing gear according to any of Claims 1 to 12, **characterised by** the open end of the appendage of the fishhook body being provided with a crocodile clamp.

16. Selective fishing gear according to any of the previous claims, **characterised by** the appendage being filiform.

17. Selective fishing gear according to any of the previous claims, **characterised by** the appendage being made of metal.

18. Selective fishing gear according to any of Claims 1 to 16, **characterised by** the appendage being made of plastic material.

19. Selective fishing gear according to any of the previous claims, **characterised by** the appendage being welded to the fishhook body.

20. Selective fishing gear according to any of Claims 1 to 18, **characterised by** the appendage being riveted to the fishhook body.

21. Selective fishing gear according to any of Claims 1 to 18, **characterised by** an appendage being attached to the fishhook body by means of a spiral-shaped end that is attached to a spiral-shaped hole made in the fishhook body.

22. Selective fishing gear according to any of Claims 1 to 18, **characterised by** the appendage being attached to the fishhook body by means of clamps.

23. Selective fishing gear according to any of Claims 1 to 18, **characterised by** the appendage being an integral part of the fishhook body.

24. Selective fishing gear according to any of the previous claims, **characterised by** the appendage extending to form an angle with regard to the shank of the fishhook body.

25. Selective fishing gear according to Claim 24, **characterised by** the angle which is formed by the appendage with regard to the shank of the fishhook body opening up in an opposite direction to the harpoon-like point of the fishhook body.

26. Selective fishing gear according to any of the previous claims, **characterised by** the fishhook body being connected to the line through a coupling or non-revolving device.

27. Selective fishing gear according to any of the previous claims, **characterised by** the appendage being fixed to the fishhook body through a coupling or non-revolving device.
